# EUROPEAN PATENT SPECIFICATION

(11) **EP 3 620 944 B1**
(45) Date of publication and mention of the grant of the patent: **07.06.2023**
(21) Application number: 18193411.8
(22) Date of filing: 10.09.2018
(51) Int. Cl.: G06F 21/57

(54) **LOW POWER EMBEDDED DEVICE USING A WRITE-ONCE REGISTER TO SPEED UP THE SECURE BOOT FROM SLEEP STATES OF THE DEVICE**
EINGEBETTETE VORRICHTUNG MIT GERINGER LEISTUNGSAUFNAHME UNTER VERWENDUNG EINES EINMALBESCHREIBBAREN REGISTERS ZUR BESCHLEUNIGUNG DES SICHEREN HOCHFAHRENS AUS SCHLAFPHASEN DER VORRICHTUNG
DISPOSITIF INTÉGRÉ DE FAIBLE PUISSANCE UTILISANT UN REGISTRE D'ÉCRITURE UNIQUE AFIN D'ACCÉLÉRER L'AMORÇAGE SÉCURISÉ À PARTIR DES ÉTATS DE SOMMEIL DU DISPOSITIF

(43) Date of publication of application: 11.03.2020
(73) Proprietor: Shenzhen Goodix Technology Co., Ltd., Shenzhen, Guangdong 518045 (CN)
(72) Inventor: Fröhlich, Martin, 01099 Dresden (DE); Kurth, Mathias, 01099 Dresden (DE)
(74) Representative: Lippert Stachow Patentanwälte Rechtsanwälte Partnerschaft mbB

(56) References cited:
- EP-A1- 2 645 294
- US-A1- 2004 024 917
- Texas Instruments: "Secure In-Field Firmware Updates for MSP MCUs", Application Report SLAA682-November 2015, 1 November 2015 (2015-11-01), XP55288092, Retrieved from the Internet: URL:http://www.ti.com/lit/an/slaa682/slaa6 82.pdf [retrieved on 2016-07-13]

## Description

The invention discloses a low power embedded device, which uses a write-once register to speed up the secure boot from sleep states of said device.

Secure boot is an important feature for embedded systems. Secure boot is a security standard developed by members of the PC industry to help make sure that a device boots using only software that is trusted by the Original Equipment Manufacturer (OEM). When the PC starts, the firmware checks the signature of each piece of boot software, including UEFI firmware drivers (also known as Option ROMs), EFI applications, and the operating system. If the signatures are valid, the PC boots, and the firmware gives control to the operating system. Hence, only authenticated (trusted) code is allowed to be executed on such systems, see for example US 2004/0024917 A1 or Texas Instruments: "Secure In-Filed Firmware Updates for MSP MCus", URL: http://www.ti.com/lit/an/slaa682/slaa682.pdf, on 2016-07-13) .

This can be ensured by the bootloader, an immutable part of code. The bootloader stored in read only memory (ROM) is the root of trust. This code is always executed at the system startup. This code verifies the integrity and authenticity of the actual firmware (mostly stored in flash memory) prior to execution of this firmware.

The integrity of the firmware is verified by calculating a hash (e.g. sha256) over the firmware image and by comparing with a reference hash. To ensure the authenticity, the reference hash must be either stored in an immutable storage (like one-time programmable memory) during factory programming, or must be verified by a digital signature algorithm (DSA) at firmware startup.

Secure embedded systems with firmware update functionality are always using DSA to authenticate new firmware images. EP 2 645 294 A1 discloses a method that includes storing a reference measurement of an object in a trusted storage module and retrieving the reference measurement from the trusted storage module before an operating system is loaded. In EP 2 645 294 A1 additional hardware is necessary.

A DSA public root key is stored as a part of the bootloader and the firmware image is signed with a corresponding private key.

Low power embedded devices with limited energy resources (like batteries) are usually most of the time in a power-off state to save energy and wake up on certain events.

To detect unauthorized changes of the firmware, the bootloader must check the firmware hash against the reference hash.

A calculation of the reference hash with secure DSAs is computational intensive and should be reduced on such systems as much as possible. Thus, it is desirable to find a secure storage of the reference hash in low power embedded devices. The requirements of such storage can be summarized as follows: The reference hash must be stored over sleep cycles of the device, updates of the firmware of such devices must be possible, and an unauthorized access to the storage must be prohibited.

The object of the invention will be solved by a low power embedded device according to claim 1 or claim 4 or claim 7.

The low power embedded device comprises a special-purpose computing system, means for storing firmware of the device and a bootloader for verifying the integrity and authenticity of the firmware, whereas the bootloader checks a firmware hash of the firmware against a reference hash, wherein the reference hash is stored in a write-once register, which is part of an always on power domain of the embedded device.

The write-once register is written by the bootloader and cannot be modified afterwards. The advantage of using a write-once register is to speed up the boot process after waking up the embedded device by skipping the calculation of the reference hash. Only the hash over the firmware must be calculated and can be compared with the stored reference hash. A firmware hash of the firmware image is understood as the checksum calculated of the present firmware that is stored. A reference hash is understood as the checksum of the original (not manipulated) firmware that is calculated by the firmware developer in a save environment. Thus, the power consumption of the boot process is reduced. It is also advantageous that only a very small hardware overhead is needed to store the reference hash inside the write-once register. No huge public private key hardware accelerator is required, because the reference calculation must be done only once. Thus, the system/microchip of the embedded device can be smaller and cheaper.

Low power embedded devices have extensive applications in consumer, commercial, automotive, industrial and healthcare markets. Generally, an embedded device's operating system will only run a single application which helps the device to do its job. Examples of embedded devices include dishwashers, banking ATM machines, routers, point of sale terminals (POS terminals) and cell phones.

In an embodiment of the inventive low power embedded device, the write-once register is locked automatically and protected against manipulation once after programming. Only the processor with the persistent bootloader can access the register. Non-manipulating the write-once register is the main advantage of the invention.

In another embodiment of the inventive embedded device, the write-once register has a same size as the reference hash. For a secure hash algorithm, e.g. sha256 only 256 bits have to be stored in the write-once register. This has the advantage that only a few flip-flops must be powered inside the always on domain. This enables a minimal power consumption.

In a preferred embodiment of the inventive embedded device, only a power-on reset or a software reset can access the write-once register. These are the only two possibilities to rewrite the write-once register. Only these two events, the power-on reset or the software reset, can reset this register. After one of these events, the register is cleared, unlocked and ready for programming. After programming, the register is locked automatically and protected against manipulation.

At a power-on reset the persistent bootloader starts executing, locates a firmware image and verifies a reference hash of the firmware image with a stored digital signature algorithm public root key, whereas the verified reference hash is stored in the write-once register and then the bootloader calculates a firmware hash of the firmware image and compares it against the verified reference hash, whereas the bootloader executes the firmware if the hash values match otherwise an error state is indicated. The power-on reset procedure is one of two events that allow a rewriting of the write-once register. A power-on reset is the reset that occurs (first event) when the device is powered on. If a power-on reset is performed the embedded device is initial powered on, and the registers are not locked and can be programmed. Any failed signature verification or any failed hash comparison is an indication of a corrupted or manipulated firmware image and requires special handling by the bootloader.

At a software reset the persistent bootloader starts executing, locates a new firmware image and verifies a new reference hash of the new firmware image with a stored digital signature algorithm public root key, whereas the new verified reference hash is stored in the write-once register and then the bootloader calculates a firmware hash of the new firmware image and compares it against the new reference hash, whereas the bootloader executes the new firmware if the hash values match otherwise an error state is indicated. The software reset procedure is the second event that allows a rewriting of the write-once register. A software reset is a system reset (all states/registers are set to their initial value) that can be issued via software, e.g. by writing a special value to a register. If a software reset is performed the updated firmware is stored firstly, whereas the registers are not locked and can be programmed. Any failed signature verification or any failed hash comparison is an indication of a corrupted or manipulated firmware image and requires special handling by the bootloader.

If the inventive low power embedded device should be waked-up from a sleep period, it is very preferred that the persistent bootloader starts executing, loads a verified reference hash from the write-once register and then the bootloader calculates a firmware hash of the firmware image and compares it against the stored reference hash, whereas the bootloader executes the firmware if the hash values match otherwise an error state is indicated. As the write-once register is part of the always on power domain it is advantageous that the reference hash is stored over sleep cycles. It is not necessary to re-calculate the reference hash again and again. Thus, the system/microchip can be smaller and cheaper. Any failed hash comparison is an indication of a corrupted or manipulated firmware image and requires special handling by the bootloader.

The invention will be explained in more detail using an exemplary embodiment.

The appended drawings show
- Fig. 1: Inventive embedded device using a write-once register;
- Fig. 2: Flow chart of procedures using the low power embedded device at a power-on reset, at a software reset and after a wakeup.

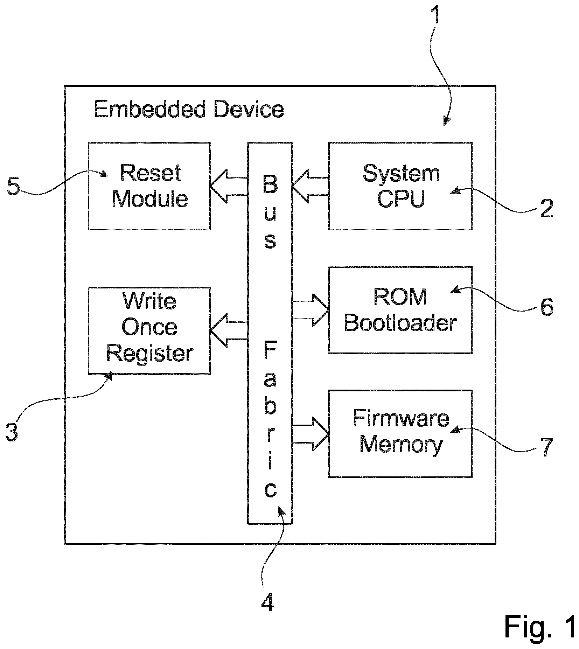

The figure 1 shows a schematic drawing of the inventive embedded device 1 using a write-once register 3. The system CPU 2 has access over a bus system 4 to the components of the embedded device 1, such as a reset module 5, the ROM bootloader 6, the firmware memory 7 and the write-once register 3. The reset module 5 can perform a power-on reset, a software reset, especially a firmware reset.

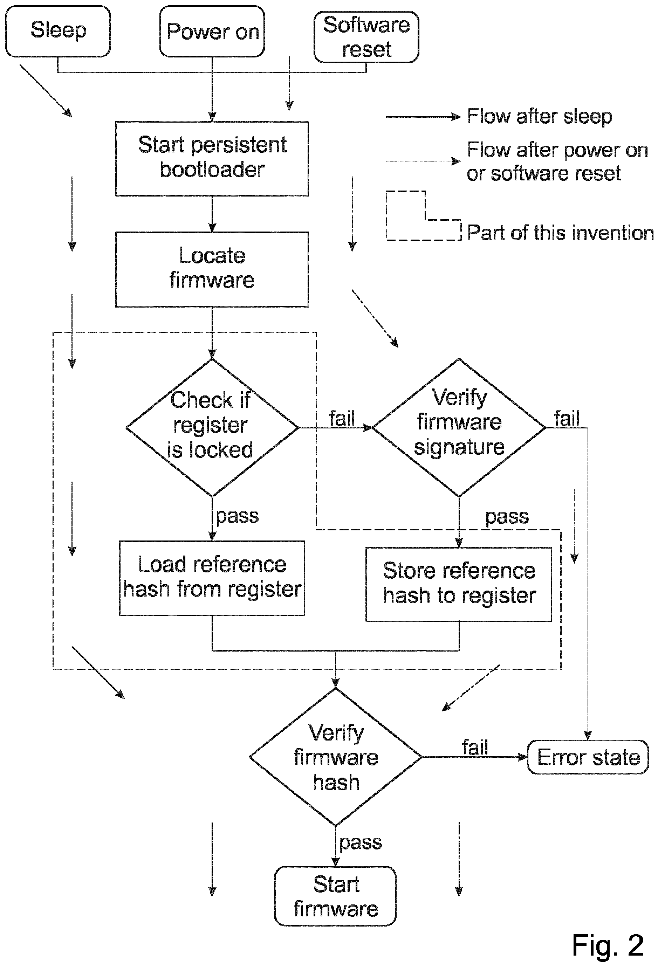

The figure 2 shows exemplary the flow chart of different procedures performed with the low power embedded device 1 using a write-once register 3 for speeding up the secure boot process of said low power embedded device 1.

If the low power embedded device 1 is in a state to perform a power-on reset, the embedded device 1 is initial powered on, and the registers are not locked and can be programmed. Therefore, the persistent bootloader 6 starts executing. The bootloader 6 locates a firmware image of the embedded device 1 and verifies a reference hash of said firmware image with a stored digital signature algorithm public root key. The persistent bootloader 6 stores the verified reference hash in the write-once register 3, which is not locked and which can be programmed. Then the bootloader 6 calculates a firmware hash of the firmware image and compares it against the verified reference hash, whereas the bootloader 6 executes the firmware if the hash values match otherwise an error state is indicated. Any failed firmware signature verification is an indication of a corrupted or manipulated firmware image and requires special handling by the bootloader 6.

If the low power embedded device 1 is in a state to perform a firmware update the embedded device 1 is initial powered on, and the updated firmware image is stored. The new firmware replaces the existing firmware or is stored next to the existing firmware. This is done before the software reset is issued. The software reset triggers the ROM bootloader 6 to select the new firmware and to start the verification, because the software reset unlocks the write-once register. The persistent bootloader 6 starts executing. The bootloader 6 locates a new firmware image and verifies a new reference hash of the new firmware image with a stored digital signature algorithm public root key. The persistent bootloader 6 stores the new verified reference hash in the write-once register, which is not locked and which can be programmed. Then the bootloader 6 calculates a firmware hash of the new firmware image and compares it against the new reference hash, whereas the bootloader executes the new firmware if the hash values match otherwise an error state is indicated. Any failed signature verification or any failed hash comparison is an indication of a corrupted or manipulated firmware image and requires special handling by the bootloader 6.

If the low power embedded device 1 is in a state to perform a wakeup of the device after a longer sleeping period, the processor 2 wakes up but the reference hash register, hence the write-once register 3 is still locked. The persistent bootloader 6 starts executing. The bootloader 6 loads a verified reference hash from the write-once register 3 and then the bootloader 6 calculates a firmware hash of the firmware image and compares it against the stored reference hash. The bootloader 6 will execute the firmware only if the hash values match otherwise an error state will be indicated. As the write-once register 3 is part of the always on power domain it is advantageous that the reference hash is stored over sleep cycles. It is not necessary to re-calculate the reference hash again and again. Thus, the system/microchip can be smaller and cheaper. Any failed hash comparison is an indication of a corrupted or manipulated firmware image and requires special handling by the bootloader 6.

### List of Reference Signs

- 1: low power embedded device
- 2: processor; system CPU
- 3: write-once register
- 4: bus system
- 5: reset module
- 6: ROM bootloader
- 7: firmware memory

## Claims

1. An embedded device (1) comprising a special-purpose computing system, means for storing firmware of the device and a bootloader (6) for verifying the integrity and authenticity of the firmware, wherein the bootloader (6) is configured to check a firmware hash against a reference hash, wherein the reference hash is stored in a write-once register (3), which is part of an always on power domain of the embedded device (1) for speeding up the secure boot process after waking up the embedded device by skipping the calculation of the reference hash, wherein at a wakeup from sleep of the embedded device (1) the persistent bootloader (6) is configured to start executing, is configured to load verified reference hash from the write-once register (3) and then the bootloader (6) is configured to calculate a firmware hash of the firmware image and to compare it against the stored reference hash, wherein the bootloader is configured to execute the firmware if the hash values match otherwise an error state is indicated.

2. The embedded device (1) according to claim 1, wherein the write-once register (3) is locked automatically and protected against manipulation once after programming.

3. The embedded device (1) according to claim 1, wherein the write-once register (3) has a same size as the reference hash.

4. An embedded device (1) comprising a special-purpose computing system, means for storing firmware of the device and a bootloader (6) configured to verify the integrity and authenticity of the firmware, wherein the bootloader (6) is configured to check a firmware hash against a reference hash, wherein the reference hash is stored in a write-once register (3), which is part of an always on power domain of the embedded device (1) for speeding up the secure boot process, wherein a power-on reset can access the write-once register, wherein at a power-on reset the persistent bootloader (6) is configured to start executing, is configured to locate a firmware image and to verify a reference hash of the firmware image with a stored digital signature algorithm public root key, wherein the verified reference hash is stored in the write-once register (3) and then the bootloader (6) is configured to calculate a firmware hash of the firmware image and compare it against the verified reference hash, wherein the bootloader (6) is configured to execute the firmware if the hash values match otherwise an error state is indicated.

5. The embedded device (1) according to claim 4, wherein the write-once register (3) is locked automatically and protected against manipulation once after programming.

6. The embedded device (1) according to claim 4, wherein the write-once register (3) has a same size as the reference hash.

7. An embedded device (1) comprising a special-purpose computing system, means for storing firmware of the device and a bootloader (6) configured to verify the integrity and authenticity of the firmware, wherein the bootloader (6) is configured to check a firmware hash against a reference hash, wherein the reference hash is stored in a write-once register (3), which is part of an always on power domain of the embedded device (1) for speeding up the secure boot process, wherein a software reset can access the write-once register, wherein at a software reset the persistent bootloader (6) is configured to start executing, is configured to locate a new firmware image and to verify a new reference hash of the new firmware image with a stored digital signature algorithm public root key, wherein the new verified reference hash is stored in the write-once register (3) and then the bootloader (6) is configured to calculate a firmware hash of the new firmware image and to compare it against the new reference hash, wherein the bootloader (6) is configured to execute the new firmware if the hash values match otherwise an error state is indicated.

8. The embedded device (1) according to claim 7, wherein the write-once register (3) is locked automatically and protected against manipulation once after programming.

9. The embedded device (1) according to claim 7, wherein the write-once register (3) has a same size as the reference hash.

## Patentansprüche

1. Eingebettete Vorrichtung (1), umfassend ein Rechensystem für spezielle Zwecke, Mittel zum Speichern der Firmware der Vorrichtung und einen Bootloader (6) zum Verifizieren der Integrität und Authentizität der Firmware, wobei der Bootloader (6) dazu ausgelegt ist, einen Firmware-Hash gegen ein Referenz-Hash zu überprüfen, wobei der Referenz-Hash in einem einmal beschreibbaren Register (3) gespeichert ist, das Teil einer ständig eingeschalteten Leistungsdomäne der eingebetteten Vorrichtung (1) ist, um den sicheren Boot-Prozess nach dem Aufwachen der eingebetteten Vorrichtung durch Überspringen der Berechnung des Referenz-Hash zu beschleunigen, wobei bei einem Aufwachen der eingebetteten Vorrichtung (1) aus dem Ruhezustand der permanente Bootloader (6) dazu ausgelegt ist, mit dem Ausführen zu beginnen, dazu ausgelegt ist, einen verifizierten Referenz-Hash aus dem einmal beschreibbaren Register (3) zu laden, und der Bootloader (6) dann dazu ausgelegt ist, einen Firmware-Hash des Firmware-Bildes zu berechnen und ihn mit dem gespeicherten Referenz-Hash zu vergleichen, wobei der Bootloader dazu ausgelegt ist, die Firmware auszuführen, wenn die Hash-Werte übereinstimmen, andernfalls ein Fehlerzustand angegeben wird.

2. Eingebettete Vorrichtung (1) nach Anspruch 1, wobei das einmal beschreibbare Register (3) einmal nach dem Programmieren automatisch gesperrt und gegen Manipulation geschützt wird.

3. Eingebettete Vorrichtung (1) nach Anspruch 1, wobei das einmal beschreibbare Register (3) die gleiche Größe wie der Referenz-Hash hat.

4. Eingebettete Vorrichtung (1), umfassend eine Rechenvorrichtung für besondere Zwecke, Mittel zum Speichern von Firmware der Vorrichtung und einen Bootloader (6), der dazu ausgelegt ist, die Integrität und Authentizität der Firmware zu verifizieren, wobei der Bootloader (6) dazu ausgelegt ist, einen Firmware-Hash gegen einen Referenz-Hash zu prüfen,
wobei der Referenz-Hash in einem einmal beschreibbaren Register (3) gespeichert ist, das Teil einer ständig eingeschalteten Leistungsdomäne der eingebetteten Vorrichtung (1) ist, um den sicheren Boot-Prozess zu beschleunigen, wobei ein Einschalt-Reset auf das einmal beschreibbare Register zugreifen kann, wobei bei einem Einschalt-Reset der permanente Bootloader (6) dazu ausgelegt ist, dass er mit dem Ausführen beginnt, dazu ausgelegt ist, ein Firmware-Bild zu lokalisieren und einen Referenz-Hash des Firmware-Bildes mit einem gespeicherten öffentlichen Root-Schlüssel eines digitalen Signaturalgorithmus zu verifizieren, wobei der verifizierte Referenz-Hash in dem einmal beschreibbaren Register (3) gespeichert wird und der Bootloader (6) dann dazu ausgelegt ist, einen Firmware-Hash des Firmware-Bildes zu berechnen und ihn mit dem verifizierten Referenz-Hash zu vergleichen, wobei der Bootloader (6) dazu ausgelegt ist, die Firmware auszuführen, wenn die Hash-Werte übereinstimmen, andernfalls wird ein Fehlerzustand angegeben.

5. Eingebettete Vorrichtung (1) nach Anspruch 4, wobei das einmal beschreibbare Register (3) einmal nach dem Programmieren automatisch gesperrt und gegen Manipulation geschützt wird.

6. Eingebettete Vorrichtung (1) nach Anspruch 4, wobei das einmal beschreibbare Register (3) die gleiche Größe wie der Referenz-Hash hat.

7. Eingebettete Vorrichtung (1), umfassend eine Rechenvorrichtung für besondere Zwecke, Mittel zum Speichern von Firmware der Vorrichtung und einen Bootloader (6), der dazu ausgelegt ist, die Integrität und Authentizität der Firmware zu verifizieren, wobei der Bootloader (6) dazu ausgelegt ist, einen Firmware-Hash gegen einen Referenz-Hash zu prüfen,
wobei der Referenz-Hash in einem einmal beschreibbaren Register (3) gespeichert ist, das Teil einer ständig eingeschalteten Leistungsdomäne der eingebetteten Vorrichtung (1) ist, um den sicheren Boot-Prozess zu beschleunigen, wobei ein Software-Reset auf das einmal beschreibbare Register zugreifen kann, wobei bei einem Software-Reset der permanente Bootloader (6) dazu ausgelegt ist, mit dem Ausführen zu beginnen, dazu ausgelegt ist, ein neue Firmware-Bild zu lokalisieren und einen neuen Referenz-Hash des neuen Firmware-Bildes mit einem gespeicherten öffentlichen Root-Schlüssel eines digitalen Signaturalgorithmus zu verifizieren, wobei der neue Referenz-Hash in dem einmal beschreibbaren Register (3) gespeichert wird und der Bootloader (6) dann dazu ausgelegt ist, einen Firmware-Hash des Firmware-Bildes zu berechnen und ihn mit dem neuen Referenz-Hash zu vergleichen, wobei der Bootloader (6) dazu ausgelegt ist, die Firmware auszuführen, wenn die Hash-Werte übereinstimmen sind, andernfalls wird ein Fehlerzustand angegeben.

8. Eingebettete Vorrichtung (1) nach Anspruch 7, wobei das einmal beschreibbare Register (3) einmal nach dem Programmieren automatisch gesperrt und gegen Manipulation geschützt wird.

9. Eingebettete Vorrichtung (1) nach Anspruch 7, wobei das einmal beschreibbare Register (3) die gleiche Größe wie der Referenz-Hash hat.

## Revendications

1. Dispositif intégré (1) comprenant un système informatique à usage spécifique, un moyen de stockage du micrologiciel du dispositif et un chargeur d'amorçage (6) pour vérifier l'intégrité et l'authenticité du micrologiciel, dans lequel le chargeur d'amorçage (6) est configuré pour vérifier une valeur de hachage de micrologiciel par rapport à une valeur de hachage de référence,
dans lequel la valeur de hachage de référence est stockée dans un registre à écriture seule (3), lequel fait partie d'un domaine toujours sous tension du dispositif intégré (1) pour accélérer le processus d'amorçage sécurisé après un réveil du dispositif intégré en sautant le calcul de la valeur de hachage de référence, dans lequel, lors d'un réveil du dispositif intégré (1) après un état de sommeil, le chargeur d'amorçage persistant (6) est configuré pour commencer son exécution, est configuré pour charger une valeur de hachage de référence vérifiée à partir du registre à écriture seule (3), puis le chargeur d'amorçage (6) est configuré pour calculer une valeur de hachage de micrologiciel de l'image de micrologiciel et la comparer à la valeur de hachage de référence stockée, dans lequel le chargeur d'amorçage est configuré pour exécuter le micrologiciel si les valeurs de hachage correspondent, sinon un état d'erreur est indiqué.

2. Dispositif intégré (1) selon la revendication 1, dans lequel le registre à écriture seule (3) est verrouillé automatiquement et protégé contre la manipulation après programmation.

3. Dispositif intégré (1) selon la revendication 1, dans lequel le registre à écriture seule (3) a une taille identique à la valeur de hachage de référence.

4. Dispositif intégré (1) comprenant un système informatique à usage spécifique, un moyen de stockage du micrologiciel du dispositif et un chargeur d'amorçage (6) configuré pour vérifier l'intégrité et l'authenticité du micrologiciel, dans lequel le chargeur d'amorçage (6) est configuré pour vérifier une valeur de hachage de micrologiciel par rapport à une valeur de hachage de référence, dans lequel la valeur de hachage de référence est stockée dans un registre à écriture seule (3), lequel fait partie d'un domaine toujours sous tension du dispositif intégré (1) pour accélérer le processus d'amorçage sécurisé, dans lequel une réinitialisation sous tension peut accéder au registre à écriture seule, dans lequel lors d'une réinitialisation sous tension, le chargeur d'amorçage persistant (6) est configuré pour commencer son exécution, est configuré pour localiser une image de micrologiciel et vérifier une valeur de hachage de référence de l'image de micrologiciel avec une clé racine publique d'algorithme de signature numérique stockée, dans lequel la valeur de hachage de référence vérifiée est stockée dans le registre à écriture seule (3) puis le chargeur d'amorçage (6) est configuré pour calculer une valeur de hachage de micrologiciel de l'image de micrologiciel et la comparer à la valeur de hachage de référence vérifiée, dans lequel le chargeur d'amorçage (6) est configuré pour exécuter le micrologiciel si les valeurs de hachage correspondent, sinon un état d'erreur est indiqué.

5. Dispositif intégré (1) selon la revendication 4, dans lequel le registre à écriture seule (3) est verrouillé automatiquement et protégé contre la manipulation après programmation.

6. Dispositif intégré (1) selon la revendication 4, dans lequel le registre à écriture seule (3) a la même taille que la valeur de hachage de référence.

7. Dispositif intégré (1) comprenant un système informatique à usage spécifique, un moyen de stockage du micrologiciel du dispositif et un chargeur d'amorçage (6) configuré pour vérifier l'intégrité et l'authenticité du micrologiciel, dans lequel le chargeur d'amorçage (6) est configuré pour vérifier une valeur de hachage de micrologiciel par rapport à une valeur de hachage de référence, dans lequel la valeur de hachage de référence est stockée dans un registre à écriture seule (3), lequel fait partie d'un domaine toujours sous tension du dispositif intégré (1) pour accélérer le processus d'amorçage sécurisé, dans lequel une réinitialisation logicielle peut accéder au registre à écriture seule, dans lequel lors d'une réinitialisation logicielle, le chargeur d'amorçage persistant (6) est configuré pour commencer son exécution, est configuré pour localiser une nouvelle image de micrologiciel et vérifier une nouvelle valeur de hachage de référence de la nouvelle image de micrologiciel avec une clé racine publique d'algorithme de signature numérique stockée, dans lequel la nouvelle valeur de hachage de référence vérifiée est stockée dans le registre à écriture seule (3), puis le chargeur d'amorçage (6) est configuré pour calculer une valeur de hachage de micrologiciel de la nouvelle image de micrologiciel et la comparer à la nouvelle valeur de hachage de référence, dans lequel le chargeur d'amorçage (6) est configuré pour exécuter le nouveau micrologiciel si les valeurs de hachage correspondent, sinon un état d'erreur est indiqué.

8. Dispositif intégré (1) selon la revendication 7, dans lequel le registre à écriture seule (3) est verrouillé automatiquement et protégé contre toute manipulation après programmation.

9. Dispositif intégré (1) selon la revendication 7, dans lequel le registre d'écriture (3) a une taille identique à la valeur de hachage de référence.
